**Europäisches Patentamt**

**European Patent Office**

**Office européen des brevets**

(11) Publication number: **0 294 384**
**B1**

# EUROPEAN PATENT SPECIFICATION

(45) Date of publication of patent specification: **06.06.90**

(21) Application number: **87901710.1**

(22) Date of filing: **16.02.87**

(86) International application number:
**PCT/SE87/00074**

(87) International publication number:
**WO 87/05081 27.08.87 Gazette 87/19**

(51) Int. Cl.⁵: **F 15 B 15/14** // A01D90/10,
B60P1/00, B65D88/60,
B65F3/28

(54) **HYDRAULIC ASSEMBLY.**

(30) Priority: **21.02.86 SE 8600791**

(43) Date of publication of application:
**14.12.88 Bulletin 88/50**

(45) Publication of the grant of the patent:
**06.06.90 Bulletin 90/23**

(84) Designated Contracting States:
**AT BE CH DE FR GB IT LI LU NL SE**

(56) References cited:
**EP-A-0 056 928**

Patent Abstracts of Japan, abstract of JP 57-178
941, published 1982-11-04
Patent Abstracts of Japan, abstract of JP 58-183
·324, published 1983-10-26

(73) Proprietor: **DE ROTTERDAMSCHE DROOGDOK
MAATSCHAPPIJ B.V.
Heijplaatstraat 21 Postbus 913
NL-3000 AX Rotterdam (NL)**

(72) Inventor: **BRUNER, Hasse
PI 2018 Rackekärr
S-544 00 Hjo (SE)**
Inventor: **PERSSON, Lars-Inge
Nygärdavägen 35
S-263 00 Höganäs (SE)**

(74) Representative: **Hynell, Magnus
Hynell Patenttjänst AB Box 236
S-683 02 Hagfors (SE)**

Courier Press, Leamington Spa, England.

## Description

### Technical field

The present invention relates to a hydraulic assembly including a group of parallel hydraulic cylinders mechanically connected in series and comprising a first stage cylinder and a pair of second stage cylinders, the pair of second stage cylinders being disposed side by side with the first stage cylinder and connected thereto, the first stage cylinder being the central cylinder of the assembly, and the piston rods of the consecutive hydraulic cylinder stages being turned forwards towards one end of said group and backwards towards the other end respectively.

### Background of the invention

In hydraulic assemblies having a large total stroke length telescopic cylinders are conventionally used. The latter usually are single acting. Consequently, in order to perform reciprocating motions having a certain stroke length two cylinders are required, which for several reasons is a disadvantage, considering i.a. the costs. Also, telescopic cylinders usually do not work with the same speed in the various cylinder elements, which sometimes is a disadvantage, too. However, there are available so called same speed cylinders, but they are extremely expensive. E.g. EP—A—0056928, JP—A—57—178941 (Patent Abstract of Japan, Vol. 7, No. 24, p 189), JP—A—58—1823324 (Patent Abstract of Japan, Vol. 8, No. 26, p 273) relate to methods of connecting two hydraulic cylinders to each other or hydraulic cylinder pairs after each other, so that they form a group of hydraulic cylinders connected in series. In this way the total stroke length can be doubled. However, in case even larger stroke lengths of a hydraulic assembly are required, which assembly can be contracted to a much shorter total length, said known constructions do not offer any solution.

### Brief description of the invention

The object of the present invention is to produce a hydruulic assembly which can be expanded to several times its length in its contraction phase, i.e. when the hydraulic rods are in ther minus positions. Another object of the present invention is to be able to use hydraulic cylinders of standard design in order to attain cost savings. These and other objects can be achieved therein that at least a third stage of hydraulic cylinders is provided, comprising a pair of cylinders disposed outside and on both sides of the cylinders of the preceeding stage, and that the piston rods of the two consecutive cylinder pairs which face one another are connected by a generally U-shaped yoke consisting of a transverse portion coupled to the piston rods of the cylinders of the preceeding stage and two longitudinal connection elements, the free end thereof being connected to the piston rods of the cylinders of the consecutive stage, respectively. By means of a hydraulic assembly, constructed in this manner, very large stroke lengths can be achieved and at the same time a small length of the contracted hydraulic package.

When the hydraulic package is compressed, i.e. when the pistons are in their minus positions, the cylinders and said yoke preferably form a nested hydraulic package, the connection elements of the yoke being disposed between the adjacent consecutive cylinders, which are connected to each other by means of the yoke, the cylinders abutting against sliding surfaces of said connection elements.

The hydraulic assembly can be mounted on and slide on a plane surface, which normally is horizontal or inclined. Also, it is possible to the place the assembly in a vertical position, but in this instance guides are used for the assembly on its two "plane sides", i.e. on mutual sides of a plane through the symmetry axes of the hydraulic cylinders.

Additional characterizing features and advantages as to the present invention are stated in the subsequent patent claims and the following description of a preferred embodiment.

### A brief description of the drawings

In the following description of a preferred embodiment reference is made to the accompanying drawings, in which:

Figure 1 is a top view of the hydraulic assembly in its contracted position;

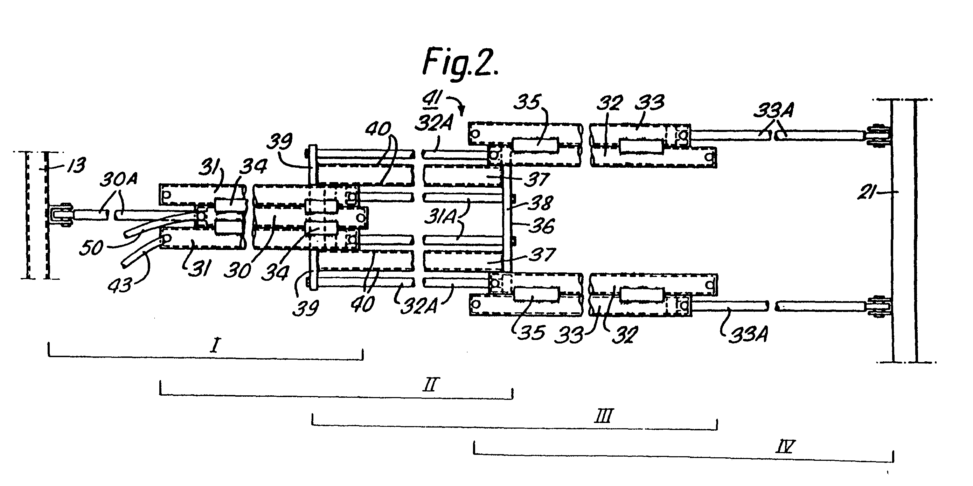

Figure 2 shows the same hydraulic assembly, on a smaller scale, when it is maximally expanded; and

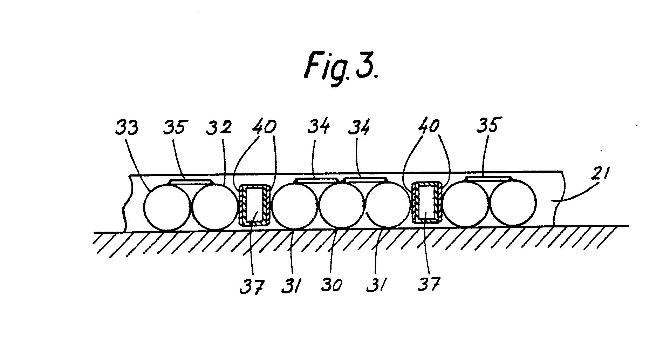

Figure 3 is a more diagrammatic view of a cross section of the hydraulic assembly along line III—III in Figure 1.

### A description of a preferred embodiment Hydraulic assembly 41 includes, according to the preferred embodiment, four hydraulic cylinder stages, I, II, III and IV, connected in series. In each stage II—IV two cylinders 31, 32 and 33 respectively, connected in parallel, are included, which have the same length and the same piston area. Hydraulic cylinder 30 of first stage I has the same length as the rest but suitably its piston area is twice as large. As an alternative this stage also includes two cylinders, connected in parallell and identical with the rest. Piston rod 30A of first stage I is fastened in the middle of a fixed transverse beam 13 in one end of the assembly. The outside of cylinder 30 is by means of plates 34 welded to the two hydraulic cylinders 31 of the second stage. Piston rods 31A of this second cylinder stage II are turned in the opposite direction in relation to said piston rods 30A and are fastened to a yoke 36. Yoke 36 is U-shaped and is provided with connection elements 37, which consist of box girders, one on each side outside said second hydraulic cylinders 31. Elements 37 connect fron fastening plate 38 of yoke 36 (to which plate piston rods 31A are connnected) to two rear fastening plates 39, which extend transversely outwards and are connected to piston rods 32A, which belong to third hydraulic cylinders 32 of said third stage III. Connection elements 37 are on their surfaces provided with low friction coatings 40. Cylinders 31 and 32 abut and slide against these low friction coatings 40, when hydraulic asembly 41 is expanded. Finally, in this hydraulic assembly are included hydraulic cylinders 33 of fourth stage IV. In the same way as cylinders 30 and 31 were connected to each other by means of plates 34, cylinders 32 and 33 are welded to each other via plates 35. Cylinders 33 are turned in the opposite direction in relation to cylinders 32. Piston rods 33A are connected to each other by means of a transverse beam 21 on an element, not shown, which is to be moved on a plane support 10, which assembly 41 is mounted on.

All of the hydraulic cylinders 30—33 are doubleacting. From a hydraulic pump, not shown, a first hydraulic tube 43 leads to the plus chamber of one of the two additional hydraulic cylinders 31 and from there via a first and a second hydraulic duct 45 to the plus chamber of the first hydraulic cylinder 30. From the plus chamber of first cylinder 30 a second hydraulic tube 46 leads to the plus chamber of one of fourth hydraulic cylinders 33 and from there to third, fourth and fifth hydraulic ducts 47—49 to the plus chambers of the remaining hydraulic cylinders 32 and 33 respectively. In an analogous way third and fourth hydraulic tubes 50, 51 and sixth to tenth hydraulic ducts 52—56 are connected to and connecting the minus chambers of the same hydraulic cylinders 30—33.

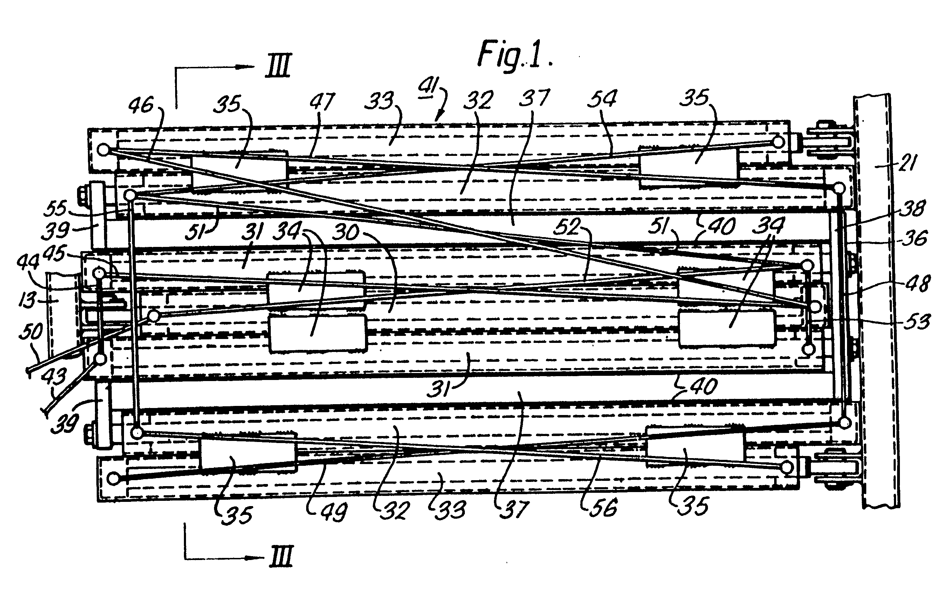

The described assembly 41 functions and works as follows. It is presumed that the hydraulic pistons of all of cylinders 30—33, to start with, are in their minus positions, Figure 1, so that hydraulic assembly 41 is maximally contracted.

When hydraulic oil is fed through first hydraulic tube 43, hydraulic rods 30A—33A are pushed outwards, so that the system of cylinders and piston rods increasingly is shaped as an equally sided pointed triangle, its point being positioned in fixed beam 13 and its base being positioned in the movable beam 21. During the forward push movement cylinders 31 und 32 slide against low friction coatings 40 on connection elements 37 of yoke 36. This contact and sliding is important for the stiffness of the construction as well as the triangular force system, which has a stabilizing influence and and contributes to a prevention of the creation of a drawer effect, since the element, which is pushed along, is pushed along between two lateral walls.

When assembly 41 is to be brought together again, hydraulic oil is fed to the respective minus chamber of cylinders 30—32 via hydraulic tube 50 and ducts 51—56. That element, which is connected to beam 21, is in this instance fed with a regular speed backwards towards the starting position.

## Claims

1. A hydraulic assembly (41) including a group of parallel hydraulic cylinders mechanically connected in series and comprising a first stage (I) cylinder (30) and a pair of second stage (II) cylinders (31), the pair of second stage cylinders being disposed side by side with the first stage cylinder and connectdec thereto, the first stage cylinder (30) being the central cylinder of the assembly, and the piston rods of the consecutive hydraulic cylinder stages being turned forwards towards one end of said group and backwards towards the other end respectively, characterized in that at least a third stage (III) of hydraulic cylinders is provided, comprising a pair of cylinders (32) disposed outside and on both sides of the cylinders (31) of the preceeding stage (II), and that the piston rods (31A, 32A) of the two consecutive cylinder pairs (31, 32) which face one another are connected by a generally U-shaped yoke (36) consisting of a transverse portion (38) coupled to the piston rods (31A) of the cylinders (31) of the preceeding stage (II) and two longitudinal connection elements (37), the free end (39) thereof being connected to the piston rods (32A) of the cylinders (32) of the consecutive stage (III), respectively.

2. An assembly according to claim 1, charcterized in that the cylinders (30—33) and yoke (36) form a nested hydraulic package (41), when the piston and the piston rods (30A—33A) are in their minus positions, i.e. are maximally pushed into the cylinders, connection elements (37) of the yoke being disposed between the adjacent consecutive cylinders (31, 32), which are connected to each other by means of the yoke and that the cylinders than abut against sliding surfaces (40) on said connection elements.

## Patentansprüche

1. Hydraulisches Aggregat (41), das eine Gruppe von parallelen Hydraulikzylindern eineschließt, die mechanisch in Reihen verbunden sind und die einen Zylinder (30) in einer ersten Stufe (I) und ein Paar Zylinder in einer zweiten Stufe (II) aufweisen, die neben dem Zylinder der ersten Stufe angeordnet und mit diesem verbunden sind, wobei der Zylinder (30) der ersten Stufe der Zentralzylinder des Aggregats ist und die Kolbenstangen der aufeinanderfolgenden Hydraulikzylinder-Stufen vorwärts zu einem Ende der besagten Gruppe und rückwärts zum anderen Ende ausgerichtet sind, dadurch gekennzeichnet, daß mindestens eine dritte Stufe (III) von Hydraulikzylindern vorgesehen ist, welche ein Paar Zylinder (32) aufweisen, die außerhalb und auf beiden Seiten der Zylinder (31) der vorhergehenden Stufe (II) angeordnet sind, und daß die Kolbenstangen (31A, 32A) der nachfolgenden Zylinderpaare (31, 32), die einander gegenüber liegen, durch ein im wesentlichen U-förmiges Joch (36) verbunden sind, das aus einem quer verlaufenden Teil (38), das mit den Kolbenstangen (31A) der Zylinder (31) der vorhergehenden Stufe (II) verbunden ist, und zwei Längsverbindungselementen (37) besteht, deren freies Ende (39) mit den Kolbenstangen (32A) der Zylinder (32) der nachfolgenden Stufe (III) verbunden ist.

2. Aggregat nach Anspruch 1, dadurch gekennzeichnet, daß die Zylinder (30—33) und das Joch (36) eine ineinander verschachtelte hydraulische Baueinheit (41) bilden, wenn die Kolben und die Kolbenstangen (30A—33A) in ihrer Minusposition sind, also wenn sie maximal in die Zylinder gedrückt sind, wobei die Verbinungselemente (37) des Jochs zwischen den benachbarten nachfolgenden Zylindern (31, 32) angeordnet sind, die mittels des Jochs miteinander verbunden sind, und daß die Zylinder dann gegen gleitende Oberflächen (40) an den Verbindungselementen anstoßen.

**Revendications**

1. Ensemble hydraulique (41) comprenant un groupe de cylindres hydrauliques parallèles qui sont mécaniquement connectés en série et comprenant un cylindre (30) du premier étage (I) et une paire de cylindres (31) du second étage (II), la paire de cylindres du second étage étant disposée côte à côte avec le cylindre du premier étage et lui étant reliée, le cylindre (30) du premier étage étant le cylindre central de l'ensemble et les tiges de piston des étages consécutifs de cylindres hydrauliques étant tournées vers l'avant, vers une extrémité dudit groupe et vers l'arrière, vers l'autre extrémité, respectivement, caractérisé en ce qu'au moins un troisième étage (III) de cylindres hydrauliques est prévu, comprenant une paire de cylindres (32) qui se trouvent à l'extérieur et sur les deux côtés des cylindres (31) de l'étage précédent (III) et en ce que les tiges de piston (31A, 32A) de deux paires consécutives de cylindres (31, 32) qui se font face sont connectées par un étrier (36), généralement en forme de U, consistant en une portion transversale (38) couplée aux tiges de piston (31A) des cylindres (31) de l'étage précédent (II) et deux éléments longitudinaux de connexion (37), dont l'extrémité libre (39) est connectée aux tiges de piston (32A) des cylindres (32) de l'étage consécutif (III), respectivement.

2. Ensemble selon la revendication 1, caractérisé en ce que les cylindres (30—33) et l'étrier (36) forment un ensemble hydraulique niché (41) quand les pistons et les tiges de piston (30A—33A) sont à leur position moins, c'est-à-dire sont poussés au maximum dans les cylindres, des éléments de connexion (37) de l'étrier étant disposés entre les cylindres consécutifs adjacents (31, 32), qui sont connectés l'un à l'autre au moyen de l'étrier et en ce que les cylindres sont alors en aboutement contre des surfaces de glissement (40) sur lesdits éléments de connexion.

Fig.1.

EP 0 294 384 B1

Fig.2.

# Fig. 3.